# EUROPEAN PATENT APPLICATION

(11) **EP 4 641 381 A1**
(43) Date of publication of application: **29.10.2025**
(21) Application number: 23906143.5
(22) Date of filing: 25.12.2023
(51) Int. Cl.: G06F 9/50, G06T 1/20

(54) **METHOD AND APPARATUS FOR REALIZING MUTUAL ACCESS OF STORAGE SPACES IN GPU INTERCONNECT ARCHITECTURE, COMPUTING DEVICE, COMPUTER READABLE STORAGE MEDIUM, AND COMPUTER PROGRAM PRODUCT**

(30) Priority: 23.12.2022 CN 202211663505
(71) Applicant: Moore Threads Technology Co., Ltd., Beijing 100036 (CN)
(72) Inventor: LI, Zhiyong, Beijing 100036 (CN); YU, Dejun, Beijing 100036 (CN); ZHANG, Xuejian, Beijing 100036 (CN); YANG, Shangshan, Beijing 100036 (CN); ZHANG, Yubo, Beijing 100036 (CN)
(74) Representative: Eisenführ Speiser
(86) International application number: PCT/CN2023/141691
(87) International publication number: WO 2024/131989

(57) **Abstract**

The present disclosure provides a method and apparatus for realizing mutual access of storage spaces in a GPU interconnect architecture, a computing device, a computer program product, and a computer readable storage medium. The GPU interconnect architecture comprises a plurality of interconnected GPU boards; each GPU board comprises a processing apparatus, a storage apparatus, a routing apparatus, and a plurality of ports adapted to be communicated with other GPU boards; the storage apparatus of each GPU board has a respective local address range; the plurality of local address ranges are uniformly addressed to form a global address. The method comprises: a routing apparatus of a first GPU board receives an access request and parses same to obtain an address segment, to be accessed by the access request, in a global address; the routing apparatus of the first GPU board determines a GPU board corresponding to the address segment, to be accessed by the access request, in the global address; and the routing apparatus of the first GPU board maps the access request to a storage apparatus of the corresponding GPU board.

## Description

### CROSS-REFERENCE TO RELATED APPLICATION

This application is filed based on and claims the priority to Chinese Patent Application No. 202211663505.7, filed on December 23, 2022 and entitled "METHOD AND APPARATUS FOR IMPLEMENTING MUTUAL ACCESS OF STORAGE SPACES IN GPU INTERCONNECT ARCHITECTURE, AND COMPUTING DEVICE", the entire content of which is incorporated herein by reference.

### TECHNICAL FIELD

The present disclosure relates to the technical field of computers, and relates to, but is not limited to a method for implementing mutual access of storage spaces in a graphics processing unit (GPU) interconnection architecture, a device for implementing mutual access of storage spaces in a GPU interconnection architecture, a computing device, a computer-readable storage medium, and a computer program product.

### BACKGROUND

Graphics processing units (also referred to as GPUs) are microprocessors which are specifically configured for personal computers, workstations, game machines, and some mobile devices (e.g., tablet computers or smart phones, etc.), and implement image-related and graphics-related computing operations. With the development of computer technology, data throughput in three-dimensional (3D) computations of high-end graphics processing units is huge, and server platforms have an extraordinary demand for peripheral component interconnect express (PCIE) resources. To meet the demand for ultra-high computing power, a plurality of GPU boards can be integrated within a computing device.

### SUMMARY

The present disclosure provides a method for implementing mutual access of storage spaces in a GPU interconnection architecture, a device for implementing mutual access of storage spaces in a GPU interconnection architecture, a computing device, a computer-readable storage medium, and a computer program product. When a plurality of GPU boards are integrated within a computing device, a processing device of each GPU board can access a storage device of any other GPU board through a plurality of communication ports by means of interconnection technology, so as to share computational or storage resources.

The present disclosure provides a method for implementing mutual access of storage spaces in a GPU interconnection architecture. The GPU interconnection architecture includes a plurality of GPU boards which are interconnected. Each GPU board includes a processing device, a storage device, a routing device, and a plurality of ports for communicating with other GPU boards. The storage device of each GPU board has a respective local address range. The plurality of local address ranges are uniformly addressed to form a global address. The method comprises operations as follows. A routing device of a first GPU board receives an access request, and parses an address segment of a global address to be accessed by the access request. The access request includes an access request sent by a processing device of the first GPU board or an access request of another GPU board received through any port. The routing device of the first GPU board determines a GPU board corresponding to the address segment of the global address to be accessed by the access request. The routing device of the first GPU board sends the access request to a storage device of the corresponding GPU board.

In some embodiments, the global address includes a plurality of global address ranges, the plurality of GPU boards have one-to-one correspondences with the plurality of global address ranges, and any two global address ranges do not overlap. The operation that the routing device of the first GPU board determines a GPU board corresponding to the address segment of the global address to be accessed by the access request includes operations as follows. The routing device of the first GPU board determines a first global address range within which the address segment of the global address to be accessed by the access request is located. The routing device of the first GPU board determines a GPU board corresponding to the first global address range.

In some embodiments, the GPU board corresponding to the first global address range is the first GPU board, and the access request is sent to a storage device of the first GPU board.

In some embodiments, the GPU board corresponding to the first global address range is a second GPU board. The operation that the routing device of the first GPU board sends the access request to a storage device of the corresponding GPU board includes operations as follows. The routing device of the first GPU board obtains information about a port connection between the first GPU board and another GPU board. The routing device of the first GPU board obtains information about a routing between the first GPU board and the second GPU board according to the information about the port connection. The routing device of the first GPU board sends the access request to a storage device of the second GPU board according to the information about the routing.

In some embodiments, the first GPU board is directly connected to the second GPU board, and the routing device of the first GPU board sends the access request to at least one of ports of the first GPU board that are interconnected with ports of the second GPU board.

In some embodiments, the first GPU board is not directly connected to the second GPU board. The operation that the routing device of the first GPU board sends the access request to a storage device of the second GPU board according to the information about the routing comprises operations as follows. The routing device of the first GPU board determines a shortest path between the first GPU board and the second GPU board according to the information about the routing. The routing device of the first GPU board sends the access request to the storage device of the second GPU board via the shortest path.

In some embodiments, the GPU board corresponding to the first global address range is a second GPU board. The operation that the routing device of the first GPU board sends the access request to a storage device of the corresponding GPU board comprises operations as follows. The routing device of the first GPU board determines a target port among the plurality of ports, and the target port is a port through which the first GPU board communicates with a third GPU board, and the third GPU board is a GPU board on a shortest path between the first GPU board and the second GPU board. The routing device of the first GPU board sends the access request through the target port.

In some embodiments, the method further comprises operations as follows. The routing device of the first GPU board sends information about a port connection between the first GPU board and another GPU board to a central processing unit, such that the central processing unit determines information about a routing based on the information about the port connection. The routing device of the first GPU board obtains the information about the routing from the central processing unit, and configures the routing device of the first GPU board based on the information about the routing. The information about the routing comprises a target port used by the first GPU board for sending the access request in case that the GPU board corresponding to the first global address range is the second GPU board.

The present disclosure provides a device for implementing mutual access of storage spaces in a GPU interconnection architecture. The GPU interconnection architecture comprises a plurality of GPU boards which are interconnected. Each GPU board comprises a processing device, a storage device, a routing device, and a plurality of ports for communicating with other GPU boards. Each GPU board has a respective local address range, and the plurality of local address ranges are uniformly addressed to form a global address. The device comprises a receiving portion, a determining portion and a sending portion. The receiving portion is configured to receive an access request, and parse an address segment of a global address to be accessed by the access request. The access request comprises an access request sent by a processing device of the first GPU board or an access request of another GPU board received through any port. The determining portion is configured to determine a GPU board corresponding to the address segment of the global address to be accessed by the access request. The sending portion is configured to send the access request to a storage device of the corresponding GPU board.

In some embodiments, the global address includes a plurality of global address ranges, the plurality of GPU boards have one-to-one correspondences with the plurality of global address ranges, and any two global address ranges do not overlap. The determining portion is configured to determine a first global address range within which the address segment of the global address to be accessed by the access request is located, and determine a GPU board corresponding to the first global address range.

In some embodiments, the GPU board corresponding to the first global address range is the first GPU board, and the sending portion is configured to send the access request to a storage device of the first GPU board.

In some embodiments, the GPU board corresponding to the first global address range is a second GPU board. The sending portion is configured to: obtain information about a port connection between the first GPU board and another GPU board; obtain information about a routing between the first GPU board and the second GPU board according to the information about the port connection; and send the access request to the storage device of the second GPU board according to the information about the routing.

In some embodiments, the first GPU board is directly connected to the second GPU board, and the sending portion is configured to: send the access request to at least one of ports of the first GPU board that are interconnected with ports of the second GPU board.

In some embodiments, the first GPU board is not directly connected to the second GPU boar, and the sending portion is configured to: determine a shortest path between the first GPU board and the second GPU board according to the information about the routing; and send the access request to the storage device of the second GPU board via the shortest path.

In some embodiments, the GPU board corresponding to the first global address range is a second GPU board, and the sending portion is configured to: determine a target port among the plurality of ports, where the target port is a port through which the first GPU board communicates with a third GPU board, and the third GPU board is a GPU board on a shortest path between the first GPU board and the second GPU board; and send the access request through the target port.

In some embodiments, the device further comprises an information sending portion, and a routing information obtaining portion and a configuration portion. The information sending portion is configured to send the information about the port connection with another GPU board to a central processing unit, such that the central processing unit determines information about a routing based on the information about the port connection. The routing information obtaining portion is configured to obtain the information about the routing from the central processing unit. The configuration portion is configured to configure the routing device of the first GPU board based on the information about the routing. The information about the routing includes a target port used by the first GPU for sending the access request in case that the GPU board corresponding to the first global address range is the second GPU board.

Another aspect of the present disclosure provides a computing device. The computing device comprises the device according to any of the foregoing embodiments.

Another aspect of the present disclosure provides a computer program product. The computer program product comprises computer-executable instructions, wherein when executed by a processor, the computer-executable instructions implement the method according to any of the foregoing embodiments.

Another aspect of the present disclosure provides a computer-readable storage medium. The computer-readable storage medium has computer-executable instructions stored therein, wherein when executed, the computer-executable instructions implement the method according to any of the foregoing embodiments.

### BRIEF DESCRIPTION OF THE DRAWINGS

In order to more clearly describe the technical solutions in the embodiments of the present disclosure or in the prior art, accompanying drawings to be used for description of the embodiments or the prior art will be briefly introduced below. Apparently, the accompanying drawings in the following disclosure describe merely some embodiments of the present disclosure. A person of ordinary skill in the art can further obtain other accompanying drawings according to these accompanying drawings without the exercise of inventive effort.
FIG. 1 is a schematic structural diagram of a GPU board according to an embodiment of the present disclosure;
FIG. 2 is a first schematic diagram of a GPU interconnection architecture according to an embodiment of the present disclosure;
FIG. 3 is a schematic flowchart of a method for implementing mutual access of storage spaces in a GPU interconnection architecture according to an embodiment of the present disclosure;
FIG. 4 is a first schematic diagram of a method for implementing mutual access of storage spaces according to an embodiment of the present disclosure;
FIG. 5 is a second schematic diagram of a method for implementing mutual access of storage spaces according to an embodiment of the present disclosure;
FIG. 6 is a third schematic diagram of a method for implementing mutual access of storage spaces according to an embodiment of the present disclosure;
FIG. 7 is a second schematic diagram of a GPU interconnection architecture according to an embodiment of the present disclosure;
FIG. 8 is a fourth schematic diagram of a method for implementing mutual access of storage spaces according to an embodiment of the present disclosure;
FIG. 9 is a fifth schematic diagram of a method for implementing mutual access of storage spaces according to an embodiment of the present disclosure;
FIG. 10 is a sixth schematic diagram of a method for implementing mutual access of storage spaces according to an embodiment of the present disclosure;
FIG. 11 is a schematic structural diagram of a device for implementing mutual access of storage spaces in a GPU interconnection architecture according to an embodiment of the present disclosure;
FIG. 12 shows a system for implementing mutual access of storage spaces according to an embodiment of the present disclosure.

The reference numerals included in the detailed description are described as follows:

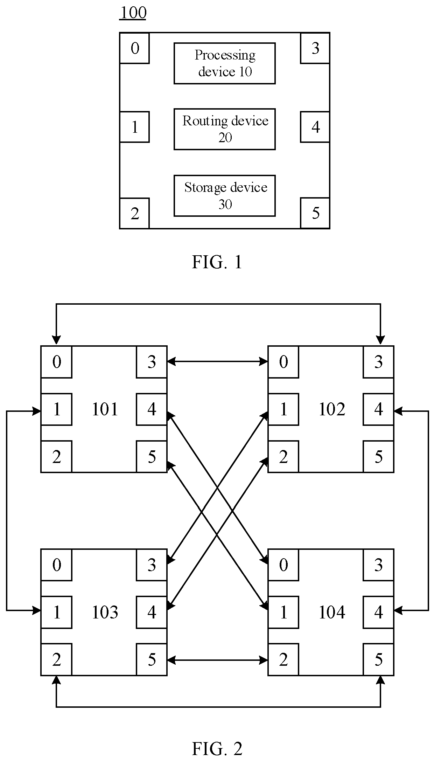

FIG. 1: GPU board 100, processing device 10, routing device 20, storage device 30, port 0, port 1, port 2, port 3, port 4, and port 5;
FIG. 2: first reference GPU board 101, second reference GPU board 102, third reference GPU board 103, and fourth reference GPU board 104;

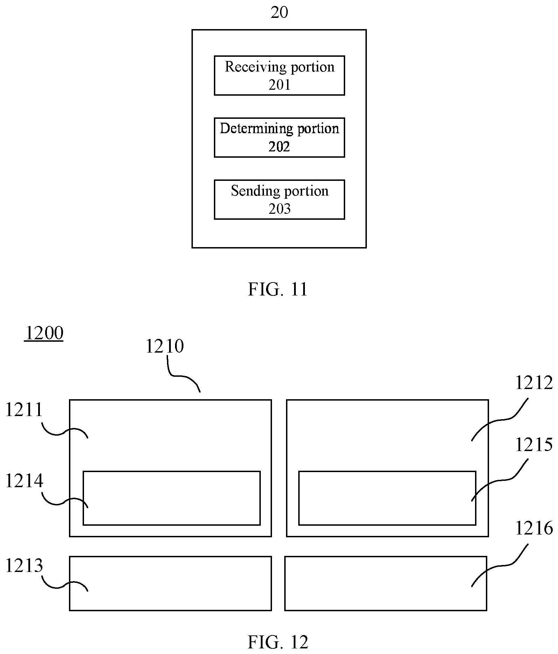

FIG. 11: device 20, receiving portion 201, determining portion 202, and sending portion 203;
FIG. 12: system 1200, computing device 1210, processing system 1211, computer-readable medium 1212, I/O interface 1213, hardware element 1214, memory/storage device 1215, and application 1216.

### DETAILED DESCRIPTION

The technical solutions in the embodiments of the present disclosure will be clearly and completely described below with reference to the drawings in the embodiments of the present disclosure. Apparently, the described embodiments are merely part of the embodiments of the present disclosure, rather than all of the embodiments. On the basis of the embodiments in the present disclosure, all other embodiments obtained by a person of ordinary skill in the art without involving any inventive effort fall within the scope of protection of the present disclosure.

The embodiments of the present disclosure provide a method for implementing mutual access of storage spaces in a GPU interconnection architecture. FIG. 1 is a schematic structural diagram of a GPU board according to an embodiment of the present disclosure. As shown in FIG. 1, each GPU board 100 may include a processing device 10. For example, the processing device 10 may be direct memory access (DMA), a graphic processing unit core (GPUCore), a link port-receive (LinkPort-Rx), a system management center (SMC) serving as a control unit, etc., as long as the processing device can send an access request. The type of the processing device 10 is not limited in the present disclosure. Each GPU board 100 may further include a routing device 20 (for example, a router), a storage device 30 (for example, a video random access memory (VRAM) serving as a display memory), and a plurality of ports for communicating with other GPU boards. FIG. 1 schematically illustrates six ports, including port 0, port 1, port 2, port 3, port 4, and port 5.

FIG. 2 is a first schematic diagram of a GPU interconnection architecture according to an embodiment of the present disclosure. The GPU interconnection architecture shown in FIG. 2 includes four GPU boards: a first reference GPU board 101, a second reference GPU board 102, a third reference GPU board 103, and a fourth reference GPU board 104. Each GPU board includes six ports. Assuming that the size of the VRAM on each GPU board is 64 gigabytes (G), i.e., a local address range of each GPU board ranges from 0 to 64 G. After the physical addresses are uniformly addressed, the address of the VRAM on each GPU board is as shown in Table 1. The uniformly addressed global address includes a plurality of global address ranges arranged sequentially starting from 0, and the plurality of GPU boards have one-to-one correspondences with the plurality of global address ranges. Assuming that the address width of the processing device in a GPU board is 48 binary digits (bits), i.e., an address range of 2^48 = 256T can be addressed, and if the VRAM of each GPU board is 64 G, a maximum of 256T/64 G = 4096 GPU boards to be interconnected can be supported. Here, only four interconnected chips are used for illustration.

**Table 1**

| GPU board number | Local address | Uniformly addressed address |
|---|---|---|
| 101 | 0-64 G | 0-64 G |
| 102 | 0-64 G | 64-128 G |
| 103 | 0-64 G | 128-192 G |
| 104 | 0-64 G | 192-256 G |

It should be noted that the size of the address range of each GPU board or the manner of uniform addressing are not limited in the present disclosure. For example, the sizes of the address ranges of different GPU boards may be the same or different, as long as the global address includes a plurality of global address ranges, the plurality of GPU boards have one-to-one correspondences with the plurality of global address ranges, and any two global address ranges do not overlap.

In a possible implementation, the uniform addressing may be performed by a processor (for example, a central processing unit (CPU), etc.). The processor may obtain device information of a plurality of GPU boards, and the device information may include the GPU board numbers and storage device information of the GPU boards, determine an addressing range for each GPU board based on the device information of the plurality of GPU boards, and send the addressing range to the corresponding GPU board, such that each GPU board addresses the storage device thereof based on the addressing range. That is, the global address of each GPU board may be obtained through uniform addressing performed by the central processing unit, and is determined based on the device information of the plurality of GPU boards.

Taking a case that uniform addressing is executed by the CPU as an example, the CPU may obtain information about a port connection (e.g., including the numbers and quantities of ports) for communication among a plurality of GPU boards, determine an addressing strategy (e.g., including information about a routing) for each GPU board based on the addressing ranges and the information about the port connection of the plurality of GPU boards, and send the addressing strategy of each GPU board to the respective GPU board, such that the GPU board can address the storage devices of the plurality of GPU boards based on the received addressing strategy. The addressing strategy may include how to address the storage device of the GPU board and how to address the storage device of another GPU board. Addressing the storage device of another GPU board may include how to determine a target port (a port for sending the access request) when a first global address range to be accessed by the access request corresponds to the storage device of another GPU board etc.

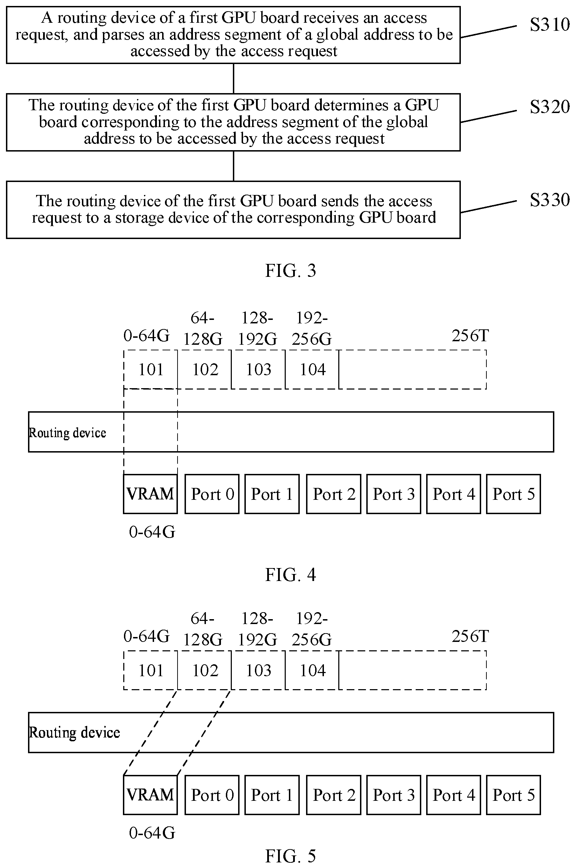

FIG. 3 is a schematic flowchart of a method for implementing mutual access of storage spaces in a GPU interconnection architecture according to an embodiment of the present disclosure. When any VRAM in the GPU interconnection architecture is to be accessed by a first GPU board (taking the first reference GPU board 101 in FIG. 2 as an example of the first GPU board), the first GPU board executes the following operations in FIG. 3.

At operation S310, a routing device of the first GPU board receives an access request, and parses an address segment of a global address to be accessed by the access request. The access request includes an access request sent by a processing device of the first GPU board or an access request of another GPU board received through any port.

At operation S320, the routing device of the first GPU board determines a GPU board corresponding to the address segment of the global address to be accessed by the access request.

At operation S330, the routing device of the first GPU board sends the access request to a storage device of the corresponding GPU board.

Here, the corresponding GPU board may be any one of the first reference GPU board 101, the second reference GPU board 102, the third reference GPU board 103, and the fourth reference GPU board 104 in FIG. 2.

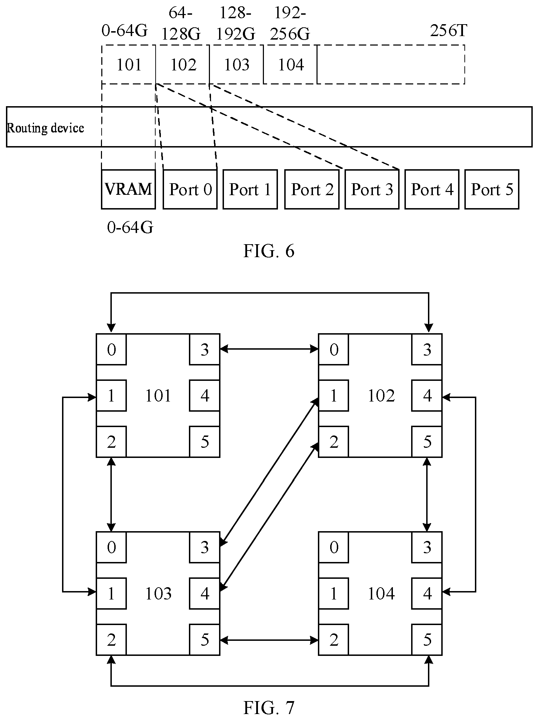

FIG. 4 is a first schematic diagram of a method for implementing mutual access of storage spaces according to an embodiment of the present disclosure. FIG. 5 is a second schematic diagram of a method for implementing mutual access of storage spaces according to an embodiment of the present disclosure. FIG. 6 is a third schematic diagram of a method for implementing mutual access of storage spaces according to an embodiment of the present disclosure.

In some embodiments, when the address segment to be accessed by the first GPU board (the first reference GPU board 101) is within the global address range 0-64 G, i.e., when the global address range to be accessed corresponds to the first GPU board (the first reference GPU board 101), as shown in FIG. 4, the routing device of the first GPU board (the first reference GPU board 101) sends the access request to the local address range 0-64 G of the VRAM on the first GPU board. When the address segment to be accessed by the first GPU board (the first reference GPU board 101) is within the global address range 64-128 G, i.e., when the global address range 64-128 G to be accessed corresponds to the second reference GPU board 102, as shown in FIG. 5, the routing device of the first GPU board (the first reference GPU board 101) sends the access request to the second reference GPU board 102. Similarly, when the address segment to be accessed by the processing device of the second reference GPU board 102 is within the global address range 64-128 G, i.e., when the global address range 64-128 G to be accessed corresponds to the second reference GPU board 102, the routing device of the second reference GPU board 102 sends the access request to the VRAM on the second reference GPU board 102 (the local address range 0-64 G of the second reference GPU board 102).

In some embodiments, the address segment to be accessed by the first GPU board (the first reference GPU board 101) is within the global address range 64-128 G, 128-192 G, or 192-256 G, i.e., the global address range to be accessed corresponds to the second reference GPU board 102, the third reference GPU board 103, or the fourth reference GPU board 104. In this case, the operation S330 that the routing device of the first GPU board sends the access request to a storage device of the corresponding GPU board includes: obtaining, by the routing device of the first GPU board, information about a port connection between the first GPU board and a second GPU board; obtaining, by the routing device of the first GPU board, information about a routing between the first GPU board and the second GPU board according to the information about the port connection; and sending, by the routing device of the first GPU board, the access request to a storage device of the second GPU board according to the information about the routing.

It should be noted that, in the operation of obtaining, by the routing device of the first GPU board, information about a port connection between the first GPU board and a second GPU board, the information about the port connection may be predetermined, and has been configured in a storage unit inside the routing device of the first GPU board, or has been uploaded to the central processing unit, and the routing device of the first GPU board may obtain the information about the port connection from the storage unit therein, or the routing device of the first GPU board may obtain the information about the port connection from the central processing unit. The routing device of the first GPU board may dynamically obtain the information about the port connection, to determine information about a routing with the second GPU board, and send the access request according to the determined information about the routing.

In some embodiments, with taking the GPU board interconnection architecture shown in FIG. 2 as an example, the address segment to be accessed by the first reference GPU board 101 is within, for example, the global address range 64-128 G, i.e., the global address range to be accessed corresponds to the second reference GPU board 102. A port is provided for direct connection between the first reference GPU board 101 and the second reference GPU board 102, and the information about the port connection between the first reference GPU board 101 and the second reference GPU board 102 includes: port 0 of the first reference GPU board 101 being interconnected with port 3 of the second reference GPU board 102, and port 3 of the first reference GPU board 101 being interconnected with port 0 of the second reference GPU board 102. In that case, as shown in FIG. 6, the routing device of the first reference GPU board 101 sends the access request to at least one of the ports of the first reference GPU board 101 that are interconnected with the ports of the second reference GPU board 102, i.e., the first reference GPU board 101 sends the access request to port 0 or port 3, or both port 0 and port 3.

It should be noted that, as stated above, when two GPU boards can be interconnected through a plurality of ports, the access request may be sent through at least one of the plurality of interconnected ports. In this case, each of the interconnected ports can access all of the global addresses of the corresponding GPU boards. Optionally, the plurality of ports may take turns sending the access request. Optionally, when each port can access a part of the global address of the corresponding GPU board, a target port of a plurality of ports corresponding to the first global address range to be accessed may be further determined, and the access request is sent through the target port, which is not limited in the present disclosure.

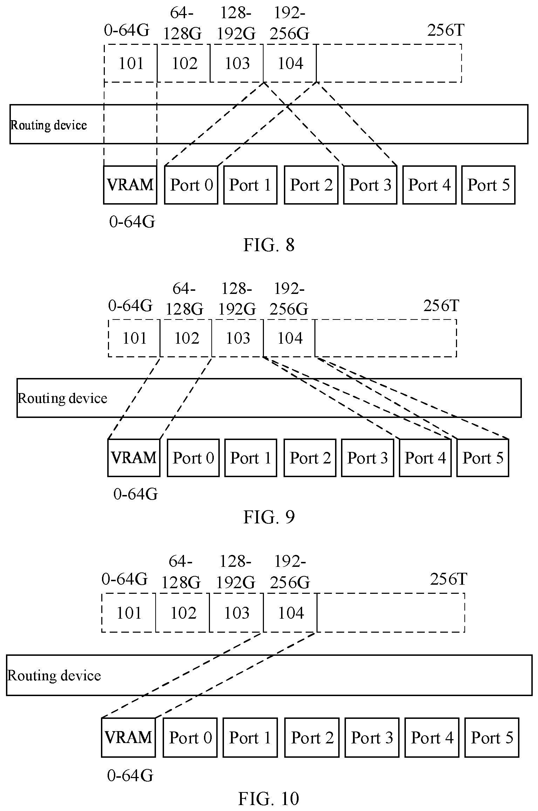

FIG. 7 is a second schematic diagram of a GPU interconnection architecture according to an embodiment of the present disclosure. FIG. 8 is a fourth schematic diagram of a method for implementing mutual access of storage spaces according to an embodiment of the present disclosure. FIG. 9 is a fifth schematic diagram of a method for implementing mutual access of storage spaces according to an embodiment of the present disclosure. FIG. 10 is a sixth schematic diagram of a method for implementing mutual access of storage spaces according to an embodiment of the present disclosure.

In some embodiments, for example, in the GPU board interconnection architecture shown in FIG. 7, there is no port for direct connection between the first reference GPU board 101 and the fourth reference GPU board 104. When the address segment to be accessed by the first reference GPU board 101 is within the global address range 192-256G, i.e., when the global address range to be accessed corresponds to the fourth reference GPU board 104, since the first reference GPU board 101 is not directly connected to the fourth reference GPU board 104, the second reference GPU board 102 or the third reference GPU board 103 is needed for forwarding. As stated above, information about a port connection between the first reference GPU board 101 and another GPU board can be obtained, and information about a routing with the fourth reference GPU board 104 is determined based on the information about the port connection, and then the routing device of the first reference GPU board 101 sends the access request to the storage device of the fourth reference GPU board 104 according to the information about the routing.

Optionally, the operation that the routing device of the first GPU board sends the access request to the storage device of the second GPU board (which is the fourth reference GPU board 104 herein) according to the information about the routing includes: determining, by the routing device of the first GPU board, a shortest path between the first GPU board and the second GPU board according to the information about the routing, and sending the access request to the storage device of the second GPU board via the shortest path.

In the GPU board interconnection architecture shown in FIG. 7, for example, the second reference GPU board 102 may be selected for forwarding. First, as shown in FIG. 8, the first reference GPU board 101 sends the access request to port 0 or port 3, to reach port 3 or port 0 of the second reference GPU board 102. Then, as shown in FIG. 9, the access request is sent by the second reference GPU board 102 to port 4 or port 5, to reach port 3 or port 4 of the fourth reference GPU board 104. Finally, as shown in FIG. 10, when the fourth reference GPU board 104 receives the access request and finds that the address range 192-256G to be accessed corresponds to the global address range of the fourth reference GPU board 104, the fourth reference GPU board 104 sends the access request to the VRAM (the local address range 0-64 G of the fourth reference GPU board 104) of the fourth reference GPU board 104.

In some embodiments, the routing device of the first GPU board sends information about a port connection between the first GPU board and another GPU board to a central processing unit, and the central processing unit determines information about a routing based on the information about the port connection. The routing device of the first GPU board acquires the information about the routing from the central processing unit and configures the routing device of the first GPU board based on the information about the routing. The information about the routing comprises a target port used by the first GPU board for sending the access request in case that the GPU board corresponding to the first global address range is the second GPU board. In that case, the operation S330 that the routing device of the first GPU board sends the access request to a storage device of the corresponding GPU board includes: determining, by the routing device of the first GPU board, a target port among the plurality of ports, where the target port is a port through which the first GPU board communicates with a third GPU board, and the third GPU board is a GPU board on a shortest path between the first GPU board and the second GPU board; and sending, by the routing device of the first GPU board, the access request through the target port. The second GPU board is the GPU board corresponding to the first global address range.

It should be noted that the information about the routing may also be determined by the first GPU board or another processor. For example, the first GPU board may send a routing information discovery packet, and determine a preferred target port based on a feedback speed of the discovery packet (for example, the first GPU board determines a preferred target port based on a routing path corresponding to a discovery packet having the fastest average feedback speed), as long as a target port used by the first GPU board for sending the access request can be determined when the GPU board corresponding to the first global address range is the second GPU board, which is not limited in the present disclosure.

By using the method for implementing mutual access of storage spaces in a GPU interconnection architecture provided by the present disclosure, a plurality of GPU boards integrated in a computing device are allowed to be interconnected arbitrarily, and the processing devices (such as the DMA, the GPUCore, the LinkPort-Rx, the SMC, etc.) inside all of the GPU boards can access the storage device (for example, a display memory VRAM) of any GPU board, thereby sharing computational or storage resources.

The present disclosure provides a device for implementing mutual access of storage spaces in a GPU interconnection architecture. The GPU interconnection architecture includes a plurality of interconnected GPU boards. Each GPU board includes a processing device, a storage device, a routing device, and a plurality of ports for communicating with other GPU boards. Each GPU board has a respective local address range, and the plurality of local address ranges are uniformly addressed to form a global address.

FIG. 11 is a schematic structural diagram of a device for implementing mutual access of storage spaces in a GPU interconnection architecture according to an embodiment of the present disclosure. As shown in FIG. 11, the device 20 includes a receiving portion 201, a determining portion 202 and a sending portion 203. The receiving portion 201 is configured to receive an access request, and parse an address segment of a global address to be accessed by the access request. The access request includes an access request sent by a processing device of a first GPU board or an access request of another GPU board received through any port, the access request includes the access request sent by the processing device of the first GPU board or the access request of another GPU board received through any port. The determining portion 202 is configured to determine a GPU board corresponding to the address segment of the global address to be accessed by the access request. The sending portion 203 is configured to send the access request to a storage device of the corresponding GPU board.

In a possible implementation, the global address includes a plurality of global address ranges, the plurality of GPU boards have one-to-one correspondences with the plurality of global address ranges, and any two global address ranges do not overlap. The determining portion 202 is configured to determine a first global address range within which the address segment of the global address to be accessed by the access request is located; and determine a GPU board corresponding to the first global address range.

In a possible implementation, the GPU board corresponding to the first global address range is the first GPU board, and the sending portion 203 is configured to: send the access request to a storage device of the first GPU board.

In a possible implementation, the GPU board corresponding to the first global address range is a second GPU board, and the sending portion 203 is configured to: obtain information about a port connection between the first GPU board and another GPU board; obtain information about a routing between the first GPU board and the second GPU board according to the information about the port connection; and send the access request to the storage device of the second GPU board according to the information about the routing.

In a possible implementation, the first GPU board is directly connected to the second GPU board, and the sending portion 203 is configured to send the access request to at least one of ports of the first GPU board that are interconnected with ports of the second GPU board.

In a possible implementation, the first GPU board is not directly connected to the second GPU board, and the sending portion 203 is configured to: determine a shortest path between the first GPU board and the second GPU board according to the information about the routing; and send the access request to the storage device of the second GPU board via the shortest path.

In a possible implementation, the GPU board corresponding to the first global address range is a second GPU board, and the sending portion 203 is configured to: determine a target port among the plurality of ports, where the target port is a port through which the first GPU board communicates with a third GPU board, and the third GPU board is a GPU board on a shortest path between the first GPU board and the second GPU board; and send the access request through the target port.

In a possible implementation, the device further includes: an information sending portion (not shown), a routing information obtaining portion (not shown), and a configuration portion (not shown). The information sending portion is configured to send information about a port connection with another GPU board to a central processing unit, such that the central processing unit determines information about a routing based on the information about the port connection. The routing information obtaining portion is configured to obtain the information about the routing from the central processing unit. The configuration portion is configured to configure the routing device of the first GPU board based on the information about the routing. The information about the routing includes a target port used by the first GPU board for sending the access request in case that the GPU board corresponding to the first global address range is the second GPU board.

The present disclosure provides a computing device. The computing device comprises the device according to any of the foregoing embodiments.

The present disclosure provides a computer program product. The computer program product comprises computer-executable instructions. When executed by a processor, the computer-executable instructions implement the method according to any of the foregoing embodiments.

The present disclosure provides a computer-readable storage medium. The computer-readable storage medium has computer-executable instructions stored therein. When executed, the computer-executable instructions implement the method according to any of the foregoing embodiments.

FIG. 12 shows a system 1200 for implementing mutual access of storage spaces according to an embodiment of the present disclosure. The system 1200 includes an exemplary computing device 1210 representing one or more systems and/or devices capable of implementing various techniques described in the present disclosure. The computing device 1210 may be, for example, a server of a service provider, a device associated with a server, a system-on-chip, and/or any other suitable computing device or computing system.

The exemplary computing device 1210 shown in FIG. 12 includes a processing system 1211, one or more computer-readable media 1212, and one or more I/O interfaces 1213 which are communicatively coupled to one another. Although not shown in FIG. 12, the computing device 1210 may further include a system bus or another data and command transfer system that couple the various components to one another. The system bus may include any one or a combination of different bus structures, such as memory buses or memory controllers, peripheral buses, universal serial buses, and/or processors or local buses utilizing any one of various bus architectures. Various other examples are further contemplated, such as control and data lines.

The processing system 1211 represents the function of performing one or more operations by using hardware. Therefore, the shown processing system 1211 includes hardware elements 1214 that may be configured as a processor, functional blocks, etc. The processing system 1211 may include application-specific integrated circuits implemented in hardware or other logic devices formed by using one or more semiconductors. The hardware elements 1214 are not limited by the materials of which the hardware elements 1214 are made or by a processing mechanism used in the hardware elements 1214. For example, the processor may be composed of semiconductor(s) and/or transistor(s) (for example, electronic integrated circuits (ICs)). In such a context, processor-executable instructions may be electronically-executable instructions.

The shown computer-readable media 1212 includes a memory/storage apparatus 1215. The memory/storage apparatus 1215 represents a memory/storage capacity associated with one or more computer-readable media. The memory/storage apparatus 1215 may include a volatile media (such as a random access memory (RAM)) and/or a non-volatile media (such as a read-only memory (ROM), a flash memory, an optical disks, a magnetic disks, etc.). The memory/storage apparatus 1215 may include fixed media (such as an RAM, an ROM, a fixed hard drives, etc.) and a removable media (such as a flash memory, a removable hard drives, an optical disks, etc.). The computer-readable media 1212 may be configured in various other modes as further described below.

The one or more I/O interfaces 1213 represent the functionality that allows a user to use various input devices to input commands and information to the computing device 1210 and optionally also allows the use of various output devices to present information to the user and/or other components or devices. Examples of the input devices include keyboards, cursor control devices (e.g., a mouse), a microphone (e.g., for voice input), scanners, touch functionality (e.g., capacitive or other sensors configured to detect physical touch), cameras (e.g., capable of detecting a motion which does not involve touch to be a gesture by using visible or non-visible wavelengths (such as infrared frequencies)), and so on. Examples of the output devices include display devices (such as monitors or projectors), speakers, printers, network cards, haptic response devices, etc. Therefore, the computing device 1210 may be configured in various modes as further described below to support user interaction.

The computing device 1210 further includes an application 1216. The application 1216 may be, for example, a software embodiment for implementing a GPU interconnection architecture, and, in combination with other elements in the computing device 1210, implements the techniques described in the present disclosure.

The present disclosure may describe various techniques in the general context of software and hardware elements or program modules. Generally, these modules include routines, programs, objects, elements, components, data structures, and so on for implementing particular tasks or implementing particular abstract data types. The terms "module", "function", and "component" as used in the present disclosure generally represent software, firmware, hardware, or combinations thereof. The features of the techniques described in the present disclosure are platform-independent, this means that these techniques may be implemented on various computing platforms having various processors.

An implementation of the described modules and techniques may be stored on a computer-readable medium in a particular form or transmitted across a computer-readable media in particular forms. The computer-readable media may include various media that can be accessed by the computing device 1210. By way of example rather than limitation, the computer-readable media may include "computer-readable storage media" and "computer-readable signal media".

As opposed to signal transmission, carrier waves, or signals, "computer-readable storage media" refers to media and/or devices capable of persistently storing information, and/or tangible storage apparatuses. Therefore, computer-readable storage media refer to a non-signal carrying media. The computer-readable storage media include hardware such as volatile and non-volatile, removable and non-removable media, and/or storage devices implemented by methods or techniques suitable for storing information (such as computer-readable instructions, data structures, program modules, logic components/circuits, or other data). Examples of the computer-readable storage media may include, but are not limited to, the RAM, the ROM, the EEPROM, the flash memory or other memory techniques, the CD-ROM, the digital versatile disks (DVD) or other optical storage apparatuses, the hard disks, the magnetic cassettes, the magnetic tapes, the magnetic disk storage apparatuses, or other magnetic storage devices, or other storage devices, the tangible media, or articles suitable for storing desired information and accessible by a computer.

The "Computer-readable signal media" refer to a signal-carrying media configured to, for example, send instructions to hardware of the computing device 1210 via a network. Signal media typically may embody computer-readable instructions, data structures, program modules, or other data in a modulated data signal such as a carrier wave, a data signal, or another transport mechanism. The signal media may further include any medium for information transmission. The term "modulated data signal" refers to a signal in which one or more features of the signal are set or changed to encode information into the signal. By way of example rather than limitation, the communication media include a wired media such as wired networks or direct-wired connections, and a wireless media such as acoustic, RF, infrared, and other wireless media.

As stated above, the hardware elements 1214 and computer-readable media 1212 represent instructions, modules, a programmable device logic, and/or fixed device logic embodied in hardware that, in some embodiments, may be used to implement at least some aspects of the techniques described in the present disclosure. The hardware elements 1214 may include components of integrated circuits or system-on-chip, application-specific integrated circuits (ASICs), field-programmable gate arrays (FPGAs), complex programmable logic devices (CPLDs), and other implementations in silicon or other hardware devices. In this context, the hardware elements 1214 may serve as processing devices for performing program tasks defined by the instructions, modules, and/or logic embodied by the hardware elements 1214, and hardware devices for storing instructions to be executed, for example, the computer-readable storage media described above.

The foregoing combinations may further be used for implementing various techniques and modules described in the present disclosure. Therefore, the software, the hardware or program modules, and other program modules may be implemented as one or more instructions and/or logic embodied in the computer-readable storage media in a particular mode and/or by one or more hardware elements 1214. The computing device 1210 may be configured to implement particular instructions and/or functions corresponding to software and/or hardware modules. Therefore, modules implemented as software executable by the computing device 1210 may be implemented, at least in part, in hardware, for example, using the computer-readable storage media and/or the hardware elements 1214 of a processing system. The instructions and/or functions may be executable/operable by one or more articles (for example, one or more computing devices 1210 and/or processing systems 1211), so as to implement the techniques, modules, and examples in the present disclosure.

In various implementations, the computing device 1210 may use various different configurations. For example, the computing device 1210 may be implemented as a computer-type device including a personal computer, a desktop computer, a multi-screen computer, a laptop-type computer, a netbook, etc. The computing device 1210 may further be implemented as a mobile device-type device including mobile devices such as a mobile phone, a portable music player, a portable gaming device, a tablet computer, a multi-screen computer, etc. The computing device 1210 may further be implemented as a television-type device, including devices having or connected to generally large screens in a leisure viewing environment. These devices include television sets, set-top boxes, gaming consoles, etc.

It should be noted that in the present disclosure, relational terms such as "first" and "second" are only used to distinguish one entity or operation from another entity or operation, and do not necessarily require or imply any actual relationship or numerical sequence between these entities or operations. In addition, the terms "comprise", "include" or any other variation thereof are intended to encompass non-exclusive inclusion, so that processes, methods, articles or devices including a series of elements include not only those elements, but also other elements that are not explicitly listed, or elements inherent to such processes, methods, articles, or devices. In the absence of additional limitations, an element defined by the statement "comprising a..." does not preclude the presence of additional identical elements in a process, method, article or device that includes the element. The orientation or positional relationships indicated by the terms "upper", "lower", etc. are based on the orientation or positional relationships shown in the drawings, which are only for the convenience of describing the present disclosure and simplifying the description, rather than indicating or implying that the device or element must have a specific orientation and be constructed and operated in a specific orientation, and therefore cannot be understood as limiting the present disclosure. Unless otherwise explicitly specified and defined, the terms "mount", "connected", and "connection" should be understood in a broad sense. For example, the "connection" may be a fixed connection, a detachable connection, or an integral connection. The "connection" may be a mechanical connection or an electrical connection. The "connection" may be direct or indirect connection through an intermediate medium, or may be internal communication between two elements. Specific meanings of the foregoing terms in the present disclosure could be understood by a person of ordinary skill in the art according to specific circumstances.

In the description of the present disclosure, numerous specific details are described. However, it could be understood that the embodiments of the present disclosure may be practiced without these specific details. In some embodiments, well-known methods, structures, and techniques are not shown in detail in order not to obscure the understanding of the present description. Similarly, it should be understood that, in the above description of exemplary embodiments of the present disclosure, the features of the present disclosure are sometimes grouped together in a single embodiment, figure, or description thereof for simplifying the present disclosure and facilitating understanding of one or more of the described aspects. However, the disclosed method should not be construed as reflecting the following intention: the present disclosure as claimed requires more features than those expressly recited in each claim. More precisely, as reflected by the claims, the disclosed aspects lie in features less than all of the features of a single embodiment described above. Therefore, the claims following the detailed description are hereby expressly incorporated into the detailed description, with each claim serving as a separate embodiment of the present disclosure.

The foregoing is merely a description of the embodiments of the present disclosure, but the scope of protection of the present disclosure is not limited thereto. Any person skilled in the art can easily conceive of changes or substitutions within the technical scope disclosed in the present disclosure, and all of the changes or substitutions should be covered by the scope of protection of the present disclosure. Therefore, the scope of protection of the present disclosure should be defined by the scope of protection of the claims.

### INDUSTRIAL APPLICABILITY

The embodiments of the present disclosure provide a method for implementing mutual access of storage spaces in a GPU interconnection architecture, a device for implementing mutual access of storage spaces in a GPU interconnection architecture, a computer program product, and a computer-readable storage medium. The GPU interconnection architecture includes a plurality of GPU boards which are interconnected. Each GPU board comprises a processing device, a storage device, a routing device, and a plurality of ports for communicating with other GPU boards. The storage device of each GPU board has a respective local address range, and the plurality of local address ranges are uniformly addressed to form a global address. The method for implementing mutual access of storage spaces in a GPU interconnection architecture includes: receiving, by a routing device of a first GPU board, an access request, and parsing an address segment of a global address to be accessed by the access request, the access request including an access request sent by a processing device of the first GPU board or an access request of another GPU board received through any port; determining, by the routing device of the first GPU board, a GPU board corresponding to the address segment of the global address to be accessed by the access request; and sending, by the routing device of the first GPU board, the access request to a storage device of the corresponding GPU board.

## Claims

1. A method for implementing mutual access of storage spaces in a graphics processing unit (GPU) interconnection architecture, the GPU interconnection architecture comprising a plurality of GPU boards which are interconnected, each of the plurality of GPU boards comprising a processing device, a storage device, a routing device, and a plurality of ports for communicating with another GPU board, the storage device of each of the plurality of GPU boards having a respective local address range, and the plurality of local address ranges being uniformly addressed to form a global address,
the method comprising:
receiving, by a routing device of a first GPU board, an access request, and parsing, by the routing device, an address segment of a global address to be accessed by the access request, the access request comprising an access request sent by a processing device of the first GPU board or an access request of another GPU board received through any port;
determining, by the routing device of the first GPU board, a GPU board corresponding to the address segment of the global address to be accessed by the access request; and
sending, by the routing device of the first GPU board, the access request to a storage device of the corresponding GPU board.

2. The method according to claim 1, wherein the global address comprises a plurality of global address ranges, the plurality of GPU boards have one-to-one correspondences with the plurality of global address ranges, and any two of the plurality of global address ranges do not overlap, and
the determining, by the routing device of the first GPU board, a GPU board corresponding to the address segment of the global address to be accessed by the access request comprises:
determining, by the routing device of the first GPU board, a first global address range within which the address segment of the global address to be accessed by the access request is located; and
determining, by the routing device of the first GPU board, a GPU board corresponding to the first global address range.

3. The method according to claim 2, wherein the GPU board corresponding to the first global address range is the first GPU board, and the access request is sent to a storage device of the first GPU board.

4. The method according to claim 2, wherein the GPU board corresponding to the first global address range is a second GPU board, and
the sending, by the routing device of the first GPU board, the access request to a storage device of the corresponding GPU board comprises:
obtaining, by the routing device of the first GPU board, information about a port connection between the first GPU board and another GPU board;
obtaining, by the routing device of the first GPU board, information about a routing between the first GPU board and the second GPU board according to the information about the port connection; and
sending, by the routing device of the first GPU board, the access request to a storage device of the second GPU board according to the information about the routing.

5. The method according to claim 4, wherein the first GPU board is directly connected to the second GPU board, and the routing device of the first GPU board sends the access request to at least one of ports of the first GPU board that are connected with ports of the second GPU board.

6. The method according to claim 4, wherein the first GPU board is not directly connected to the second GPU board, and
the sending, by the routing device of the first GPU board, the access request to a storage device of the second GPU board according to the information about the routing comprises:
determining, by the routing device of the first GPU board, a shortest path between the first GPU board and the second GPU board according to the information about the routing; and
sending, by the routing device of the first GPU board, the access request to the storage device of the second GPU board via the shortest path.

7. The method according to claim 2, wherein the GPU board corresponding to the first global address range is a second GPU board, and
the sending, by the routing device of the first GPU board, the access request to a storage device of the corresponding GPU board comprises:
determining, by the routing device of the first GPU board, a target port among the plurality of ports, wherein the target port is a port through which the first GPU board communicates with a third GPU board, and the third GPU board is a GPU board on a shortest path between the first GPU board and the second GPU board; and
sending, by the routing device of the first GPU board, the access request through the target port.

8. The method according to claim 7, further comprising:
sending, by the routing device of the first GPU board, information about a port connection between the first GPU board and another GPU board to a central processing unit, wherein the central processing unit determines information about a routing based on the information about the port connection;
obtaining, by the routing device of the first GPU board, the information about the routing from the central processing unit; and
configuring the routing device of the first GPU board based on the information about the routing;
wherein the information about the routing comprises a target port used by the first GPU board for sending the access request when the GPU board corresponding to the first global address range is the second GPU board.

9. A device for implementing mutual access of storage spaces in a graphics processing unit (GPU) interconnection architecture, the GPU interconnection architecture comprising a plurality of GPU boards which are interconnected, each of the plurality of GPU boards comprising a processing device, a storage device, a routing device, and a plurality of ports for communicating with another GPU board, the storage device of each of the plurality of GPU boards having a respective local address range, and the plurality of local address ranges being uniformly addressed to form a global address,
the device comprising:
a receiving portion configured to receive an access request, and parse an address segment of a global address to be accessed by the access request, the access request comprising an access request sent by a processing device of the first GPU board or an access request of another GPU board received through any port;
a determining portion configured to determine a GPU board corresponding to the address segment of the global address to be accessed by the access request; and
a sending portion configured to send the access request to a storage device of the corresponding GPU board.

10. A computing device comprising the device according to claim 9.

11. A computer program product comprising computer-executable instructions, wherein when executed by a processor, the computer-executable instructions implement the method according to any one of claims 1 to 8.

12. A computer-readable storage medium having computer-executable instructions stored therein, wherein when executed, the computer-executable instructions implement the method according to any one of claims 1 to 8.
